# EUROPÄISCHE PATENTANMELDUNG

(11) **EP 1 167 702 A1**
(43) Veröffentlichungstag der Anmeldung: **02.01.2002**
(21) Anmeldenummer: 01112201.7
(22) Anmeldetag: 18.05.2001
(51) Int. Cl.: F01L 9/04

(54) **Elektromagnetisch betätigbares Gaswechselventil mit pneumatischen Rückstellfedern für eine Kolbenbrennkraftmaschine**

(30) Priorität: 27.06.2000 DE 10031233
(71) Anmelder: FEV Motorentechnik GmbH, 52078 Aachen (DE)
(72) Erfinder: Haas, Albert, Dr.-Ing., 4731 Eynatten (BE); Pischinger, Franz, Prof.-Dr., 52072 Aachen (DE)
(74) Vertreter: Langmaack, Jürgen, Dipl.-Ing.

(57) **Zusammenfassung**

Die Erfindung betrifft einen elekromagnetischen Aktuator für ein Gaswechselventil an einer Kolbenbrennkraftmaschine, der zwei mit Abstand zueinander angeordnete Elektromagnete (9, 10) aufweist, zwischen deren Polflächen (12) entsprechend ihrer über eine Steuereinrichtung (16) gesteuerten Bestromung ein an einem Führungselement (13) befestigter Anker (11; 11.6), der mit dem Gaswechselventil (4) in Verbindung steht, gegen die Kraft von zwei als Gasdruckfedern ausgebildeten Rückstellfedern hin und her bewegbar geführt ist, für die ein Zylinder (7) vorgesehen ist, der durch einen mit dem Führungselement (13) verbundenen Kolben (6; 11.6) in zwei Druckräume (7.1, 7.2) unterteilt ist, die mit jeweils einer Zufuhrleitung (7.3, 7.4) versehen sind, der ein Druckhaltemittel in Form eines Drosselelementes (15; 26.1, 26.2) zugeordnet ist, wobei zwischen den Zufuhrleitungen (7.3, 7.4) eine Verbindungsleitung (7.5) angeordnet ist, die über eine Verbindungsleitung (21; 27) mit einer Druckgasversorgung (14) verbunden sind.

## Beschreibung

Neben den herkömmlichen, über Nockenwellen mechanisch betätigten Gaswechselventilen an Kolbenbrennkraftmaschinen ist es inzwischen bekannt, die Gaswechselventile jeweils über einen elektromagnetischen Aktuator zu betätigen, der zwei mit Abstand zueinander angeordnete Elektromagnete aufweist, zwischen denen entsprechend ihrer über eine Steuereinrichtung gesteuerten Bestromung ein Anker gegen die Kraft von herkömmlichen Schraubendruckfedern hin und her bewegbar geführt ist, der mit dem Gaswechselventil in Wirkverbindung steht. Eine derartige Anordnung ist beispielsweise aus DE-A-3 024 109 bekannt.

Die Betätigung des Gaswechselventils durch einen elektromagnetischen Aktuator erlaubt es in Verbindung mit der elektronischen Steuereinrichtung, über die auch die übrigen Funktionen der Kolbenbrennkraftmaschine abhängig vom Lastwunsch und unter Berücksichtigung der Betriebsdaten der Kolbenbrennkraftmaschine steuerbar sind, das Gaswechselventil im Betrieb frei variabel anzusteuern. So können beispielsweise der Öffnungszeitpunkt, die Öffnungsdauer oder auch der Öffnungshub entsprechend den Lastanforderungen des Motorbetriebes verändert werden.

Als Rückstellfedern wurden bisher mechanische Federn in Form von Schraubendruckfedern eingesetzt, durch die jedoch das durch Anker und Gaswechselventil als Masse und die Rückstellfedern gebildete Feder-Masse-System hinsichtlich seiner Schwingcharakteristik als feste Größe vorgegeben ist.

Aus DE 197 33 186 ist ein elektromagnetischer Aktuator zur Betätigung eines Gaswechselventiles bekannt, bei dem die mechanischen Rückstellfedern durch pneumatische Federn ersetzt sind. Die Verwendung von pneumatischen Federn bietet den Vorteil, daß durch eine Veränderung des anstehenden Gasdruckes die Federkonstante im Betrieb veränderbar ist, so daß mit Hilfe der ohnehin vorhandenen Motorsteuereinrichtung eine Anpassung der Federkonstanten und damit auch der Schwingungscharakteristik des aus Anker und Gaswechselventil einerseits und den Rückstellfedern andererseits gebildeten schwingfähigen Systems vorgenommen und so auch die Schwingungscharakteristik an die jeweiligen Anforderungen des Motorbetriebs angepaßt werden kann. Eine Erhöhung der Rückstellkraft ist beispielsweise zweckmäßig bei einem Betrieb mit hohen Drehzahlen, um über eine Erhöhung der Rückstellkräfte der Rückstellfedern die für kurze Betätigungszeiten notwendige höhere Beschleunigung des Ankers und des Gaswechselventils beim Lösen vom haltenden Elektromagneten zu bewirken. Ein weiterer Vorteil der Verwendung pneumatischer Federn besteht darin, daß gegenüber den elektromagnetischen Aktuatoren mit mechanischer Feder ein elektromagnetischer Aktuator mit pneumatischer Feder eine deutlich geringere bewegte Masse aufweist, so daß die Werkstoffbelastungen und die Körperschallanregungen trotz der hohen Ventil- und Aktuatoraufsetzgeschwindigkeiten reduziert sind.

Der Erfindung liegt die Aufgabe zugrunde, einen elektromagnetischen Ventiltrieb mit pneumatischen Federn noch zu verbessern.

Diese Aufgabe wird gemäß der Erfindung gelöst durch einen elektromagnetischen Aktuator für ein Gaswechselventil an einer Kolbenbrennkraftmaschine, der zwei mit Abstand zueinander angeordnete Elektromagnete aufweist, zwischen deren Polflächen entsprechend ihrer über eine Steuereinrichtung gesteuerten Bestromung ein an einem Führungselement befestigter Anker, der mit dem Gaswechselventil in Verbindung steht, gegen die Kraft von zwei als Gasdruckfedern ausgebildeten Rückstellfedern hin und her bewegbar geführt ist, für die ein Zylinder vorgesehen ist, der durch einen mit dem Führungselement verbundenen Kolben in zwei Druckräume unterteilt ist, die über wenigstens eine Zufuhrleitung, in der wenigstens ein Druckhaltemittel vorgesehen ist, mit einer Druckgasversorgung verbunden sind. Die beiden durch den Kolben im Zylinder abgeteilten Druckräume bilden in Verbindung mit dem über die Druckgasversorgung vorgegebenen Ruhegasdruck die pneumatischen Rückstellfedern, deren "Federkonstante" durch eine Veränderung des Ruhegasdruckes in den Druckräumen mit Hilfe der Gasdruckversorgung und der Druckhaltemittel vorgenommen werden kann. Neben der Gewichtsreduzierung zeichnet sich ein derartiger elektromagnetischer Aktuator durch eine kompakte Bauweise aus. Das Führungselement kann beispielsweise gebildet werden durch eine gesonderte Führungsstange, die stoffschlüssig oder über ein Längenausgleichselement mit dem Ventilschaft verbunden ist. Auch der Ventilschaft kann als Führungselement dienen.

Während es grundsätzlich möglich ist, als Druckhaltemittel mit entsprechenden Stellantrieben versehene Drosselventile oder Drosselelemente vorzusehen, die über die Motorsteuerung ansteuerbar sind, ist in einer vorteilhaften Ausgestaltung der Erfindung vorgesehen, daß als Druckhaltemittel ein poröses Material vorgesehen ist. Insbesondere bei Kolbenbrennkraftmaschinen mit sehr hohen Drehzahlen, die beispielsweise im Bereich von 10.000 Umdrehungen pro Min. und mehr liegen können, bietet ein poröses Material als Druckhaltemittel den Vorteil, daß bei entsprechender Wahl der Porosität und dem dadurch gegebenen hohen Durchflußwiderstand nur ein sehr geringer Gasabfluß durch das poröse Material des Druckhaltemittels in Form einer Leckage erfolgt. Der schnelle Wechsel der im Betrieb auftretenden periodischen, über dem Ruhegasdruck liegenden Druckerhöhungen jeweils in der Öffnungsphase und der Schließphase des Gaswechselventils verhindert in Verbindung mit dem hohen Durchflußwiderstand bei einer entsprechenden Druckvorgabe aus der Druckgasversorgung praktisch eine Leckage. Gleichwohl ist eine Veränderung des Ruhegasdruckes in den Druckräumen auch im Betrieb möglich, da über die Gasdruckversorgung der am porösen Material auf der Versorgungsseite anstehende Gasdruck erhöht oder erniedrigt werden kann, so daß die Druckräume umgekehrt zu dem vorstehend beschriebenen Leckagevorgang mit Druckgas gefüllt oder aber entsprechend dem vorstehend beschriebenen Leckagevorgang entleert werden können.

In einer ersten Ausgestaltung der Erfindung ist vorgesehen, daß das aus porösem Material bestehende Druckhaltemittel in der Zufuhrleitung angeordnet ist. Damit kann das Druckhaltemittel an die Stelle eines steuerbaren Stellventils eingebaut werden.

In einer anderen vorteilhaften Ausgestaltung der Erfindung ist vorgesehen, daß das poröse, das Druckhaltemittel bildende Material zumindest einen Teilbereich der die Druckräume begrenzenden Wandung des Zylinders bildet. Mit dieser Maßnahme wird die Konzeption der Druckgasversorgung an der Kolbenbrennkraftmaschine konstruktiv vereinfacht.

In weiterer vorteilhafter Ausgestaltung der Erfindung ist vorgesehen, daß die Führungsstange in den an die Druckräume angrenzenden Bereichen in aerostatischen Gleitführungen gelagert ist. Eine aerostatische Gleitführung kann beispielsweise aus einer Hülse aus porösem Material, beispielsweise einem offenporig gesinterten Material mit hohem Verschleißwiderstand, bestehen, die über eine entsprechende Druckversorgung mit einem Gas von außen her beaufschlagt wird, so daß die Führungsstange in der Gleithülse auf einem Luftpolster und damit praktisch berührungslos auf der Führungsfläche der Gleithülse geführt wird. Statt einer besonderen Druckgasbeaufschlagung der Gleitführungen besteht bei der erfindungsgemäßen Federgestaltung die Möglichkeit, die aerostatischen Gleitführungen aus den Druckräumen mit Gas zu versorgen. Die hierdurch entstehende minimale Leckage wird über die Druckgasversorgung der Druckräume ausgeglichen.

In weiterer Ausgestaltung der Erfindung ist vorgesehen, daß zumindest der die Druckräume enthaltende Zylinder mit einer Kühlung in Verbindung stehen. Damit ist es möglich, die Erwärmung des Druckgases infolge der pulsierenden Gasdruckwechsel in den Druckräumen zumindest teilweise abzuführen, so daß sich im Betrieb hier eine Gleichgewichtslage einstellt und definierte Federungsverhältnisse einstellbar sind.

Die Erfindung wird mit weiteren Merkmalen anhand schematischer Zeichnungen von Ausführungsbeispielen näher erläutert. Es zeigen:
- Fig. 1: schematisch den Grundaufbau eines Aktuators mit pneumatischer Feder,
- Fig. 2: ein erstes abgewandeltes Ausführungsbeispiel,
- Fig. 3: ein weiteres abgewandeltes Ausführungsbeispiel,
- Fig. 4: ein Fließbild eines Ausführungsbeispiel einer Druckgasversorgung,
- Fig. 5: eine Ausbildung des Kolbens als Schieberventil,
- Fig. 6: eine Abwandlung der Ausführung gem. Fig. 3,
- Fig. 7: schematisch den Druckverlauf in einem Druckraum bei der Ausführungsform gem. Fig. 6,
- Fig. 8: schematisch den Verlauf von Ventilhub, Gaskraft und Strom in Abhängigkeit von der Zeit für die Ausführungsform gem. Fig. 6.

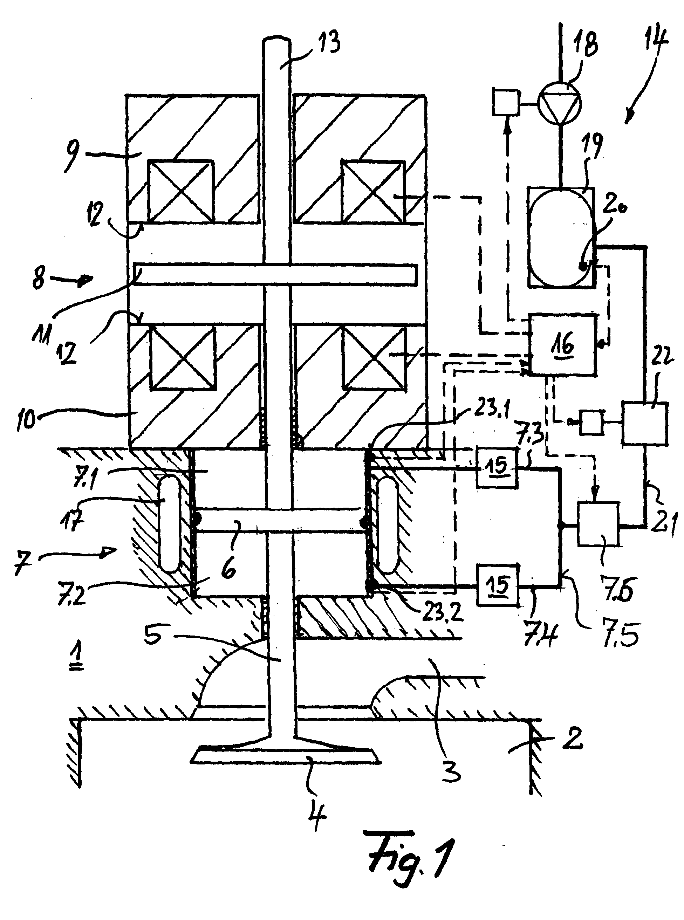

In Fig. 1 ist für eine Kolbenbrennkraftmaschine ein Teilschnitt eines Zylinderkopfs 1 für den Gaskanalbereich eines Zylinders 2 dargestellt. Der in den Zylinder 2 einmündende Gaskanal 3, ein Gaseinlaßkanal oder auch ein Gasauslaßkanal, kann über ein Gaswechselventil 4 entsprechend der Ansteuerung im Arbeitstakt des Motors geöffnet und geschlossen werden. Das Gaswechselventil ist an seinem Schaft 5 mit einem Kolben 6 versehen, der in einem in eine Ausnehmung im Zylinderkopf 1 eingesetzten Zylinder 7 geführt ist.

Dem Gaswechselventil 4 ist ein elektromagnetischer Aktuator 8 zugeordnet, der im wesentlichen aus einem Schließmagneten 9 und einem Öffnermagneten 10 gebildet ist. Die Elektromagneten 9 und 10 sind mit Abstand zueinander angeordnet. Zwischen ihnen ist ein Anker 11 hin und her bewegbar geführt. Bei dem hier dargestellten Ausführungsbeispiel befindet sich der Anker 11 bei stromlos gesetzten Elektromagneten 9, 10 in einer Mittelstellung zwischen den Polflächen 12 der beiden Magneten.

Der Anker 11 ist mit einer Führungsstange als Führungselement 13 in Form einer Verlängerung des Schaftes 5 des Gaswechselventils verbunden. Der Zylinder 7 ist durch den Kolben 6 in zwei Druckräume 7.1 und 7.2 unterteilt, die jeweils über eine Zufuhrleitung 7.3 und 7.4 mit einer Druckgasversorgung 14 verbunden sind, die in ihrem prinzipiellen Aufbau nachstehend noch erläutert wird. In den beiden Zufuhrleitungen 7.3 und 7.4 sind Druckhaltemittel 15 angeordnet, die hier nur schematisch dargestellt sind und ebenfalls nachstehend noch erläutert werden.

Als Druckhaltemittel 15 in den Zufuhrleitungen 7.3 und 7.4 können von einer Motorsteuerung 16 steuerbare Drosselventile oder verstellbare Drosseleinrichtungen angeordnet sein. Bevorzugt werden als Drosselelemente Körper aus einem porösen Material eingesetzt werden, die in ihrer Porosität so ausgelegt sind, daß ein hoher Durchflußwiderstand vorhanden ist.

Im Betrieb wird über die Steuereinrichtung 16 die Bestromung der Elektromagneten 9 und 10 entsprechend den Betriebsanforderungen vorgenommen. Die Druckräume 7.1 und 7.2 des Zylinders 7 stellen in Verbindung mit dem Kolben 6 Gasdruckfedern dar, die in der hier vorgesehenen Schaltung als Rückstellfedern für das elektromagnetische System aber auch als Schließfeder für das Gaswechselventil 4 dienen.

Werden die beiden Druckräume 7.1 und 7.2 mit einem vorgegebenen Ruhegasdruck beaufschlagt, dann nimmt der Anker 11 bei stromlos gesetzten Elektromagneten 9, 10 die dargestellte Mittelstellung ein. Wird nun durch ein Anschwingen oder durch besondere Startmaßnahmen der Anker 11 bei Bestromung des Schließmagneten 9 an diesem zur Anlage gebracht, dann erhöht sich entsprechend der Verschiebung des Kolbens 6 der Druck im Druckraum 7.1, der dann die Funktion einer gespannten Öffnerfeder erfüllt.

Wird nun der Schließmagnet 9 stromlos gesetzt, dann führt die Druckerhöhung im Druckraum 7.1 dazu, daß der Anker 11 in Richtung auf den Schließmagneten 10 beschleunigt wird, wobei sich nach dem Überschwingen über die Mittellage der Gasdruck im Druckraum 7.2 entsprechend erhöht. Beim Überschwingen über die Mittellage wird der Öffnermagnet 10 bestromt, so daß das sich aufbauende Magnetfeld den Anker 11 fängt und an der Polfläche 12 des Öffnermagneten 10 zur Anlage bringt und so das Gaswechselventil 4 entsprechend der durch die Steuereinrichtung 16 vorgegebene Bestromungszeit in Öffnungsstellung gehalten wird.

Soll das Gaswechselventil geschlossen werden, dann wird in umgekehrter Reihenfolge der Öffnermagnet stromlos gesetzt und entsprechend der Schließmagnet 9 bestromt. Die bei wechselnder Bestromung mögliche Hin- und Herbewegung des Ankers und des damit in Verbindung stehenden Gaswechselventils sowie die jeweiligen Haltezeiten in der Schließ- und in der Offenstellung, gegebenenfalls auch der Hub, wenn das Gaswechselventil nicht voll geöffnet werden soll, erfolgt dann entsprechend der von der Steuereinrichtung 16 durch die Motordrehzahl vorgegebenen Ansteuerung der Bestromung. Die infolge der synchronen Bewegung von Anker 11 und Kolben 6 in den Druckräumen 7.1 und 7.2 bewirkten Druckwechsel erfolgen dementsprechend in der hohen Frequenz der Bewegung des Gaswechselventils 4.

Werden statt gesteuerter Druckhaltemittel poröse Körper eingesetzt, ist der Durchflußwiderstand durch die aus porösem Material gebildeten Druckhaltemittel 15 sehr hoch. Über eine Verbindungsleitung 7.5 zwischen den Zufuhrleitungen 7.3 und 7.4 kann ein geringes Gasvolumen jeweils in den anderen Druckraum überströmen. Darüber hinaus steht über eine Zufuhrleitung 21 von der Druckgasversorgung 14 ein entsprechend hoher Gasdruck an. Daher können praktisch keine Leckageverluste durch ein Rückströmen des Druckgases aus den Druckräumen 7.1 und 7.2 auftreten, wenn diese jeweils in Öffnungs- bzw. Schließstellung des Gaswechselventils einen deutlichen Überdruck gegenüber dem über den Ruhegasdruck vorgegebenen Vordruck der Druckgasversorgung aufweisen.

Damit in der Druckgasversorgung nur ein Druck in Höhe der gewünschten Ruhegasdrücke vorgehalten werden muß, ist in der Zufuhrleitung 21 ein ansteuerbares Sperrventil 7.6 angeordnet.

Um der infolge der Druckpulsation auftretenden Erwärmung des Druckgases in den Druckräumen 7.1 und 7.2 entgegenzuwirken, ist bei dem hier dargestellten Ausführungsbeispiel die Wandung des Zylinders 7 von einem Kühlmittelkanal 17 umschlossen, der an das Kühlsystem des Motors angeschlossen ist.

Die Druckgasversorgung 14 besteht bei dem hier dargestellten schematischen Ausführungsbeispiel im wesentlichen aus einem Kompressor 18, der einen Druckbehälter 19 mit Druckgas, beispielsweise Luft speist und hierbei einen hohen Vordruck aufrechterhält. Der Vordruck im Druckspeicher 19 wird über einen entsprechenden Sensor 20 erfaßt, so daß beispielsweise über die Motorsteuerung 16 der Kompressor 18 laufend entsprechend angesteuert werden kann.

Über die Versorgungsleitung 21 werden die Zufuhrleitungen 7.3 und 7.4 der Druckräume 7.1 und 7.2 entsprechend mit Druck beaufschlagt. Der jeweils erforderliche, an den Zufuhrleitungen 7.3 und 7.4 anstehende Ruhegasdruck wird beispielsweise über eine verstellbare Drossel 22 vorgegeben, die über die Steuereinrichtung 16 angesteuert wird.

Mit Hilfe von Sensoren 23.1 und 23.2 wird der Druck in den Druckräumen 7.1 und 7.2 erfaßt und die Signale in der Steuereinrichtung 16, wobei der jeweils notwendige "Ruhegasdruck" über eine entsprechende Signalerfassungtechnik aus dem pulsierenden Drucksignal abgeleitet und die Druckgasversorgung 14 entsprechend angesteuert werden kann. Außerdem kann über die Druckerfassung durch die Drucksensoren 23.1 und 23.2 die Bestromung der Elektromagneten so gesteuert werden, daß der Anker 11 jeweils zuverlässig gefangen wird und an der Polfläche zur Anlage kommt. Bei Erhöhung des Drucks in den Druckräumen muß die Magnetkraft durch Erhöhung des Stromes entsprechend erhöht werden. Bei Verminderung des Drucks kann die Magnetkraft durch Verminderung des Stromes vermindert werden. Durch eine derartige Anpassung ist es möglich, die Magnetkraft optimal einzustellen und den Stromverbrauch nur auf das notwendige Maß einzustellen. Über entsprechende Sensoren kann auch die Temperaturlage in den Druckräumen 7.1 und 7.2 erfaßt und bei der Versorgung der Druckräume 7.1 und 7.2 mit Druckgas berücksichtigt werden.

Bei der Ausführungsform gemäß Fig. 1 besteht die Möglichkeit, den Zylinderraum und damit die Gasdruckfeder mit Kreisquerschnitt auszuführen, während der elektromagnetische Aktuator mit seinen Jochkörpern in üblicher Weise in Rechteckform ausgebildet werden kann. Damit ist die Möglichkeit gegeben, sehr schmalbauende Aktuatoren zu konzipieren.

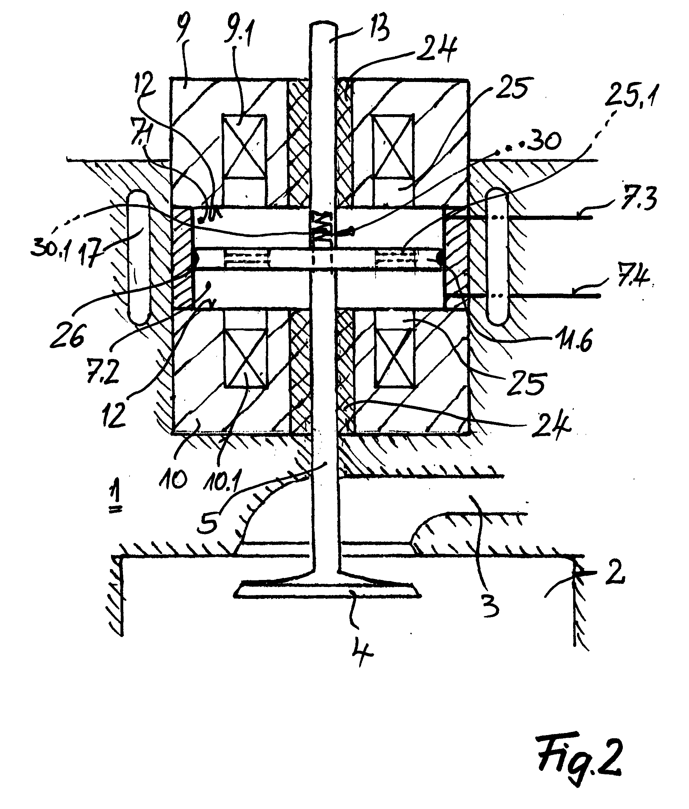

In Fig. 2 ist ein Ausführungsbeispiel dargestellt, bei dem die Elektromagneten 9 und 10 mit ihren Polflächen 12 einen Zylinderraum begrenzen. Bei diesem Ausführungsbeispiel ist ein als Kolben ausgebildeter Anker 11.6 vorgesehen, der den von den Polflächen 12 der Elektromagneten 9 und 10 begrenzten Zylinderraum in entsprechende Druckräume 7.1 und 7.2 unterteilt. Die Druckräume 7.1 und 7.2 stehen jeweils über Zufuhrleitungen 7.3 und 7.4 mit einer entsprechenden Druckgasversorgung in Verbindung, wie dies anhand von Fig. 1 dargestellt und beschrieben ist.

Eine mit dem Kolben 11.6 verbundene Führungsstange 13 und entsprechend der Schaft 5 des Gaswechselventils sind bei dem hier dargestellten Ausführungsbeispiel in aerostatischen Gleitlagern 24 geführt, die jeweils mit den Druckräumen 7.1 und 7.2 in Verbindung stehen, so daß die Versorgung der aerostatischen Gleitführungen 24 aus dem Druckraum 7.1 bzw. 7.2 erfolgen kann. Die für die Versorgung der aerostatischen Gleitlager benötigten Luft- bzw. Gasmengen sind so gering, daß diese gewollten Leckagen über die Druckgasversorgung 14 ausgeglichen werden können. Es ist aber auch möglich, die Gleitführungen 24 jeweils über gesonderte, hier nicht näher dargestellte Zufuhrleitungen, beispielsweise mit der Druckgasversorgung 14 zu verbinden, so daß das den Gleitführungen 24 zugeführte Druckgas gleichzeitig als "Sperrgas" in bezug auf eine Leckage aus den Druckräumen 7.1 und 7.2 dient. Derartige aerostatische Gleitführungen 24 können auch für den Schaft 5 bei der Ausführung gemäß Fig. 1 eingesetzt werden.

Die Spulenkörper 9.1 bzw. 10.1 der beiden Elektromagneten 9 und 10 sind jeweils gegenüber ihrer Polfläche 12 zurückgesetzt, so daß jeweils bei anliegendem Anker 11.6 an einer Polfläche der hierdurch gebildete Freiraum als Druckhalteraum 25 für das Gas, beispielsweise Luft, zur Verfügung steht. Auch bei dieser Ausführungsform ist eine Kühlung der Zylinderwandung 26 möglich.

Statt der Anordnung eines Druckhalteraums 25 im Joch, wie dargestellt, kann ein Druckhalteraum 25.1 auch am Anker 11.6 angeordnet werden, wie strichpunktiert angedeutet. Der Druckhalteraum 25.1 im Anker 11.6 kann auch zusätzlich zum Druckhalteraum 25 im Joch vorgesehen sein.

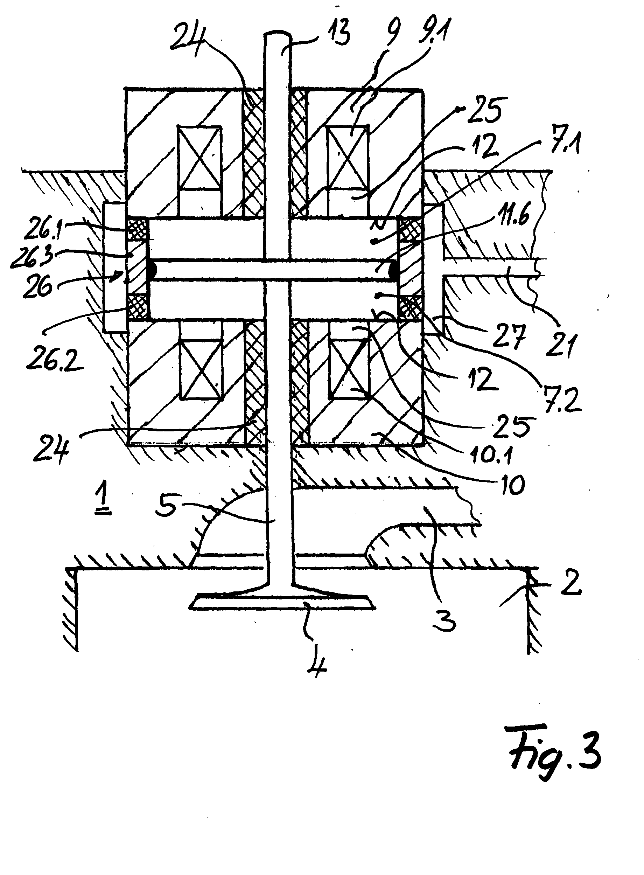

In Fig. 3 ist eine Abwandlung der anhand von Fig. 2 beschriebenen Ausführungsform dargestellt. Der Grundaufbau entspricht der Ausführungsform gemäß Fig. 2, so daß hier auf die vorstehende Beschreibung verwiesen werden kann. Gleiche Bauelemente sind mit gleichen Bezugszeichen versehen.

Bei dieser Ausführungsform ist die Zylinderwandung 26 jeweils in ihren unmittelbar den Polflächen 12 zugekehrten Bereichen 26.1 bzw. 26.2 aus einem porösen Material hergestellt, während der Zwischenbereich 26.3 aus dichtem Material besteht.

Auf der Außenseite ist die Zylinderwandung 26 von einem Ringraum 27 umfaßt, der über eine Zuleitung 21 mit der Druckgasversorgung in Verbindung steht. Bei einer Druckgasbeaufschlagung des Ringraumes 27 mit entsprechender Druckhöhe wirken die porösen Wandbereiche 26.1 und 26.2 entsprechend den Druckhaltemitteln 15, so wie dies anhand von Fig. 1 beschrieben worden ist. Zugleich erfüllen sie die Funktion der in Fig. 1 beschriebenen Zufuhrleitungen 7.3 und 7.4, während der Ringraum 27 in seiner Funktion der Verbindungsleitung 7.5 entspricht. Auch bei dieser Ausführungsform sind für die Führungsstange 13 und dem damit verbundenen Schaft 5 aerostatische Gleitführungen 24 vorgesehen.

Die vorstehend beschriebene Ausgestaltung der Wandungen 26 für den Zylinderraum 7 kann auch bei einer Ausführungsform gemäß Fig. 1 eingesetzt werden, so daß dann die als Druckhaltemittel dienenden Bereiche 26.1 und 26.2 der Zylinderwandung an die Stelle der in Fig. 1 noch gesondert dargestellten Druckhaltemittel 15 treten.

Auch die Ausführungsform gemäß Fig. 3 kann mit einer entsprechenden Kühlung für den Zylinder 7 versehen sein.

Ebenso ist die zu Fig. 1 beschriebene Sensorik für Druck, Temperatur etc. für die Ausführungen gemäß Fig. 2 und Fig. 3 vorgesehen.

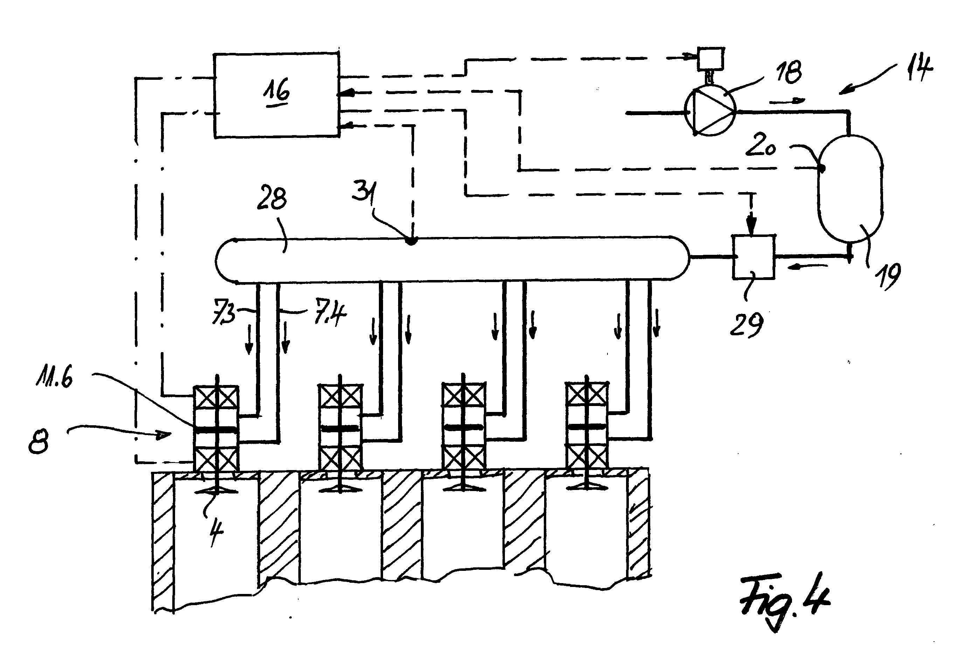

In Fig. 4 ist schematisch in Form eines Fließbildes ein Ausführungsbeispiel für eine Druckgasversorgung von mehreren elektromagnetischen Aktuatoren der vorbeschriebenen Art an einer Mehrzylinderkolbenbrennkraftmaschine dargestellt. Der Grundaufbau der Druckgasversorgung 14 entspricht im wesentlichen dem Aufbau, wie er anhand von Fig. 1 beschrieben worden ist, so daß hierauf verwiesen werden kann. Über einen Kompressor 18 wird ein Druckspeicher 19 mit einem entsprechend hohen Vordruck beaufschlagt, der zweckmäßig über dem notwendigen maximalen Ruhegasdruck liegt, wobei das Druckniveau im Druckspeicher 19 über einen Drucksensor 20 von der Steuereinrichtung 16 überwacht wird und bei Bedarf der Kompressor 18 eingeschaltet wird. Die einzelnen Aktuatoren 8, die hier nur schematisch dargestellt sind, können hinsichtlich der Ausbildung der pneumatischen Federn entsprechend Fig. 1, Fig. 2 oder auch Fig. 3 ausgebildet sein. Für die nachfolgende Beschreibung wird die Ausführungsform gemäß Fig. 2 zugrunde gelegt.

Um nun Druckverluste durch Strömungsvorgänge zwischen dem Druckspeicher 19 und den einzelnen Druckfedern zu vermeiden, ist ein Druck-Rail 28 vorgesehen, an den die einzelnen Aktuatoren 8 über ihre Zufuhrleitungen 7.3 und 7.4 bzw. eine entsprechende Zufuhrleitung 21 angeschlossen sind, wie dies für die vorstehend erläuterten Ausführungsbeispiele beschrieben wurde. Hierdurch ist gewährleistet, daß auch bei einer Mehrzylinderkolbenbrennkraftmaschine an allen Aktuatoren 8 der gleiche Gasvordruck ansteht. Über eine steuerbare Drosseleinrichtung 29, die von der Steuereinrichtung 16 angesteuert wird, kann das Gasdruckniveau im Druck-Rail 28 entsprechend den Erfordernissen variiert werden. Das Druckniveau im Druck-Rail 28 wird über einen Drucksensor 31 erfaßt, dessen Signal in der Steuereinrichtung 16 ausgewertet wird.

Bei entsprechenden Einsatzfällen ist es auch möglich, auf die Verwendung eines Kompressors 18 zu verzichten, so daß dann der Druckspeicher 18 beispielsweise über eine andockbare Druckgasquelle aufgefüllt werden muß. Insbesondere in einem solchen Fall ist es zweckmäßig, wenn ein Gas mit geringem Polytropenexponenten verwendet wird, das die Erwärmung des Gases durch die Druckpulsation vermindert.

Da betriebsabhängig über eine Veränderung des Gasvordruckes auch die Federkraft der durch die Druckräume 7.1 und 7.2 in Verbindung mit dem darin geführten Kolben gebildeten Rückstellfedern durch eine Veränderung des Ruhegasdruckes im Druck-Rail 28 verändert werden kann, muß entsprechend auch über die Steuereinrichtung 16 die Bestromung der Elektromagneten 9, 10 so eingestellt werden, daß jeweils die für das Fangen und das Halten erforderliche Magnetkraft vorhanden ist. Die Stromversorgung ist hier nur für den äußerst linken Aktuator 8 eingezeichnet.

Zum Ausgleich von Verschleiß und/oder temperaturbedingten Längenänderungen von Schaft 5 und Führungsstange 13 ist es zweckmäßig, einen Spielausgleich vorzusehen. Ein derartiger Spielausgleich 30 kann beispielsweise im Bereich der Verbindung des Ankers 11 mit der Führungsstange 13 bzw. dem Schaft 5 angeordnet sein, wie dies für das Ausführungsbeispiel gemäß Fig. 2 angedeutet ist. Durch einen derartigen Spielausgleich ist gewährleistet, daß in Schließstellung sowohl das Gaswechselventil 4 an seinem Dichtsitz als auch der Anker 11.6 an der Polfläche 12 des Schließmagneten 9 anliegt.

Die Anordnung ist hierbei beispielsweise so ausgestaltet, daß der Anker 11.6 mit der Führungsstange 13 fest verbunden ist, sich aber relativ zum Schaft 5 des Gaswechselventils bewegen kann. Zwischen der Führungsstange 13 und dem Schaft 5 ist ein Federelement 30.1 angeordnet, beispielsweise in Form einer mechanischen oder pneumatischen Feder, die nach dem Schließen des Ventils noch die weitere Bewegung des Ankers 11.6 bis zur Anlage an der Polfläche 12 des Schließmagneten 9 zuläßt.

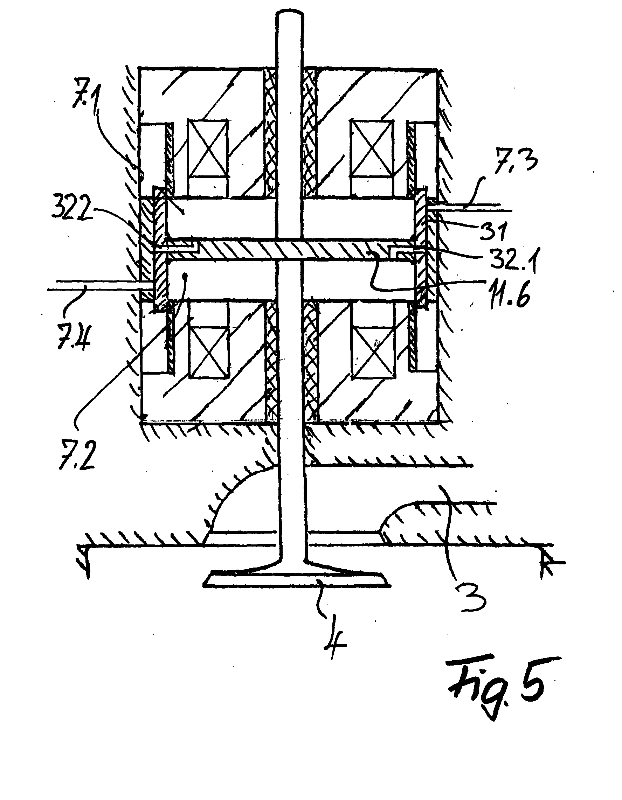

In Fig. 5 ist eine Ausführungsform dargestellt, bei der der Kolben 6 für die Ausführungsform gemäß Fig. 1 ebenso wie der als Kolben ausgebildete Anker 11.6 für die Ausführungsform gemäß Fig. 2 oder Fig. 3 als Schieberventil ausgebildet ist.

Der Kolben 6 bzw. 11.6 ist an seinem Umfang mit einer schürzenartigen Dichtung 32 versehen, die gegenüber den Druckräumen 7.1 und 7.2 abgedichtet geführt ist. Der Kolben 6 bzw. 11.6 ist ferner mit jeweils wenigstens einem Durchtrittskanal 32.1 für den Druckraum 7.1 und wenigstens einen Durchtrittskanal 32.2 für den Druckraum 7.2 versehen. Hierbei kann es zweckmäßig sein, wenn die schürzenartige Dichtung aus einem nicht-magnetischen Material besteht. Durch diese Anordnung ist gewährleistet, daß jeweils in der Endstellung kein komprimiertes Gas in den anderen Druckraum überströmen kann. Eine Druckkorrektur kann dann jeweils für den Druckraum mit dem niedrigeren Druckniveau vorgenommen werden.

Die Zufuhrleitungen 7.3 und 7.4 münden so in den Zylinder 7 ein, daß jeweils in der Endstellung des Kolbens eine Verbindung zu einem Druckraum gegeben ist. In der Schließstellung des Gaswechselventils steht die Zufuhrleitung 7.3 über den Durchtrittskanal 32.1 mit dem Druckraum 7.2 in Verbindung. In der Öffnungsstellung steht entsprechend die Zufuhrleitung 7.4 über den Durchtrittskanal 32.2 mit dem Druckraum 7.1 in Verbindung.

Da die beiden Druckräume 7.1 und 7.2 über die Kolbendichtung auch gegeneinander abgedichtet sind, wirkt ein derart ausgebildeter Kolben wie ein Schieberventil, durch das abwechselnd die beiden Druckräume 7.1 und 7.2 mit der Druckgasversorgung in Verbindung stehen und so Leckageverluste ausgeglichen werden können und/oder ein vorgebbarer Druck aufrechterhalten oder verändert werden kann.

Auch bei dieser Ausführungsform sind die Verbindungsleitungen 7.3 und 7.4 mit Druckhaltemitteln 15, vorzugsweise Druckhaltemitteln in Form von Drosselelementen versehen. Auch die vorbeschriebene Verbindungsleitung 7.5 kann vorgesehen werden. Ebenso sind zweckmäßigerweise die anhand von Fig. 3 beschriebenen Druckhalteräume 25 vorzusehen.

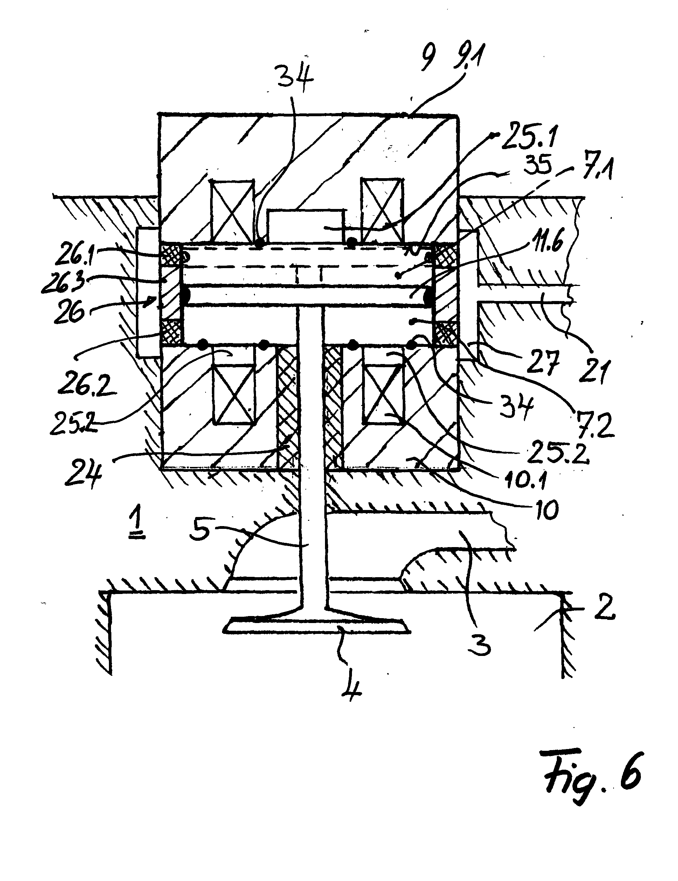

In Fig. 6 ist eine Abwandlung der Ausführungsform gem. Fig. 3 dargestellt. Identische Bauelemente sind mit identischen Bezugszeichen gekennzeichnet, so dass im wesentlichen auf die Beschreibung zu Fig. 3 verwiesen werden kann. Bei dieser Abwandlung ist der Anker 11.6 mit dem Schaft 5 des Gaswechselventils verbunden und nur über die aerostatische Gleitführung 24 geführt, eine Führungsstange ist nicht vorgesehen. Der Druckhalteraum 25.1 im oberen Schließmagneten 9 ist zentral angeordnet, während der Druckhalteraum 25.2 im Öffnermagneten 10 durch Zurücksetzen des Spulenkörpers 10.1 geschaffen wird, wie dies bereits in Fig. 3 dargestellt ist. Die Druckhalteräume 25.1 und 25.2 sind jeweils mit Dichtungen 34 versehen, so dass sie bei anliegendem Ankerraum abgedichtet sind. Der Druckhalteraum 25.1 bzw. 25.2 mit seinem Volumen V25 und der bei Anlage des Ankers an den Dichtungen verbleibende Schadraum 35 mit seinem Volumen V35 sind so zu dimensionieren, dass der Druckabfall nach Entleerung des Schadraumes 35 sehr gering ist. Der Schadraum 35 und insbesondere die nicht zu vermeidende Leckagespalte am Anker 11.6 sind so auszulegen, dass der Druck im Schadraum abgebaut ist, bevor der Anker losgelassen wird.

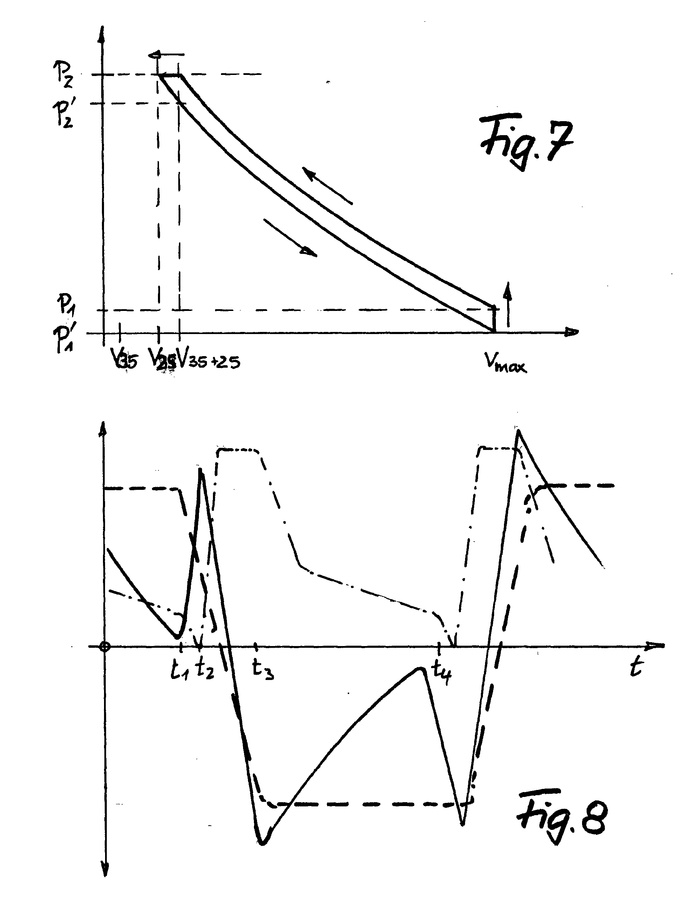

Der Verlauf der Druckverhältnisse, beispielsweise im Druckraum 7.1, ist in Fig. 7 in einem pV-Diagramm dargestellt. In Fig. 8 ist ein Diagramm dargestellt, das den Verlauf eines vollständigen Zyklus "Öffen-Schließen" des Ventilhubes, der zugehörigen Gaskraft und des Stroms in Abhängigkeit von der Zeit wiedergibt.

Wie Fig. 7 erkennen lässt, stellt sich bei Anlage des Ankers an der Dichtung 34 zunächst im Schadraum 35 und im Volumen des Druckraumes 25 der Druck P2 ein.

Durch den Druckabbau im Schadraum 35 während der Anlagezeit das Ankers an der Polfläche auf den Druck P₂ kann die erforderliche Magnetkraft zum Halten des Ankers reduziert werden. Das hat den Vorteil, dass bei Einleitung des Ventilöffnungsvorganges zum Zeitpunkt t₁ durch Abschaltung der Bestromung auch die Endmagnetisierungsphase t₁ bis t₂ kürzer ist, so dass geringere Gaskraftverluste auftreten. Beim Abheben des Ankers von den Dichtungen 34 ergibt sich für das im Druckhalteraum 25 abgeschlossene Gasvolumen eine plötzliche Querschnittserweiterung. Damit nimmt die Gaskraft sprunghaft zu und beschleunigt den Anker in Richtung auf den Öffnermagneten, wenn zuvor der Anker am Schließmagneten gehalten war.

Während der Bewegung des Ankers 11.6 in Richtung auf den Öffnermagneten 10 wird der Öffnermagnet 10 bestromt, so dass die sich aufbauende Magnetkraft den Anker anziehen kann. Gleichzeitig nimmt der Gasdruck im unteren Druckraum 7.2 zu, bis bei Anlage des Ankers an der Polfläche wiederum ein Druck P2 erreicht wird. Auch hier nimmt infolge der Leckage aus dem Schadraum 35 der Druck und damit die Gaskraft am Anker deutlich ab, so dass schon vor dem Abschalten des Stromes über die Motorsteuerung der Haltestrom am Öffnermagneten entsprechend reduziert werden kann und Verzögerungen beim Ablösen des Ankers von der Polfläche deutlich reduziert werden.

## Patentansprüche

1. Elektromagnetischer Aktuator für ein Gaswechselventil an einer Kolbenbrennkraftmaschine, der zwei mit Abstand zueinander angeordnete Elektromagnete (9, 10) aufweist, zwischen deren Polflächen (12) entsprechend ihrer über eine Steuereinrichtung (16) gesteuerten Bestromung ein an einem Führungselement (13) befestigter Anker (11; 11.6), der mit dem Gaswechselventil (4) in Verbindung steht, gegen die Kraft von zwei als Gasdruckfedern ausgebildeten Rückstellfedern hin und her bewegbar geführt ist, für die ein Zylinder (7) vorgesehen ist, der durch einen mit dem Führungselement (13) verbundenen Kolben (6; 11.6) in zwei Druckräume (7.1, 7.2) unterteilt ist, die mit jeweils einer Zufuhrleitung (7.3, 7.4) versehen sind, der ein Druckhaltemittel in Form eines Drosselelementes (15; 26.1, 26.2) zugeordnet ist, wobei zwischen den Zufuhrleitungen (7.3, 7.4) eine Verbindungsleitung (7.5) angeordnet ist, die über eine Verbindungsleitung (21; 27) mit einer Druckgasversorgung (14) verbunden sind.

2. Aktuator nach Anspruch 1, **dadurch gekennzeichnet, daß** als Druckhaltemittel (15; 26.1, 26.2) ein poröses Material vorgesehen ist.

3. Aktuator nach Anspruch 1 oder 2, **dadurch gekennzeichnet, daß** das aus porösem Material bestehende Druckhaltemittel (15) in der Zufuhrleitung (7.3, 7.4) angeordnet ist.

4. Aktuator nach Anspruch 1 oder 2, **dadurch gekennzeichnet, daß** das poröse, das Druckhaltemittel (15) bildende Material zumindest einen Teilbereich (26.1, 26.2) der die Druckräume (7.1, 7.2) begrenzenden Wandung (26) des Zylinders (7) bildet.

5. Aktuator nach einem der Ansprüche 1 bis 4, **dadurch gekennzeichnet, daß** das Führungselement (13) in den an die Druckräume (7.1, 7.2) angrenzenden Bereichen in aerostatischen Gleitführungen (24) gelagert ist.

6. Aktuator nach einem der Ansprüche 1 bis 5, **dadurch gekennzeichnet, daß** die aerostatischen Gleitführungen (24) aus den Druckräumen (7.1, 7.2) mit Gas versorgt werden.

7. Aktuator nach einem der Ansprüche 1 bis 6, **dadurch gekennzeichnet, daß** die aerostatischen Gleitführungen (24) über die Druckgasversorgung (14) mit Gas versorgt werden.

8. Aktuator nach einem der Ansprüche 1 bis 7, **dadurch gekennzeichnet, daß** das Führungselement (13) den Schaft (5) des Gaswechselventils (4) bildet.

9. Aktuator nach einem der Ansprüche 1 bis 8, **dadurch gekennzeichnet, daß** der von den Polflächen (12) der Elektromagneten (9, 10) begrenzte Zwischenraum als Zylinder (7) ausgebildet ist und der Anker (11.6) den Kolben bildet.

10. Aktuator nach einem der Ansprüche 1 bis 9, **dadurch gekennzeichnet, daß** bei anliegendem Anker (11.6) jeweils zwischen den Polflächen (12) und dem Anker (11.6) ein Druckhalteraum (25) vorhanden ist.

11. Aktuator nach eine der Ansprüche 1 bis 10, **dadurch gekennzeichnet, daß** zumindest der Zylinder (7) mit einer Kühlung (17) in Verbindung steht.

12. Aktuator nach einem der Ansprüche 1 bis 11, **dadurch gekennzeichnet, daß** die Druckgasversorgung (14) einen Speicherbehälter (19) aufweist.

13. Aktuator nach einem der Ansprüche 1 bis 12, **dadurch gekennzeichnet, daß** die Druckgasversorgung einen Kompressor (18) aufweist.

14. Aktuator nach einem der Ansprüche 1 bis 12, **dadurch gekennzeichnet, daß** zwischen der Druckgasversorgung (14) und den Druckhaltemitteln (15) ein steuerbares Druckregelventil (29) angeordnet ist.

15. Aktuator nach einem der Ansprüche 1 bis 14, **dadurch gekennzeichnet, daß** den Druckräumen (7.1, 7.2) jeweils Drucksensoren (23. 1, 23.2) zugeordnet sind, die mit der Steuereinrichtung (16) in Verbindung stehen.

16. Aktuator nach einem der Ansprüche 1 bis 15, **dadurch gekennzeichnet, daß** der Kolben (6; 11.6) mit Durchtrittskanälen (32.1, 32.2) versehen ist, von denen wenigstens ein Durchtrittskanal (32.1) in den Druckraum (7.1) und wenigstens ein Durchtrittskanal (32.2) in den Druckraum (7.2) ausmündet, und daß die jeweiligen Durchtrittskanäle jeweils mit einer Zufuhrleitung (7.3, 7.4) in Verbindung stehen, wenn der Kolben (6; 11.6) sich in einer Endstellung befindet.

17. Aktuator nach einem der Ansprüche 1 bis 16, **dadurch gekennzeichnet, dass** an den Elektromagneten (9, 10) und/oder am Anker (11..6) jeweils Druckhalteräume (25) angeordnet sind.

18. Aktuator nach einem der Ansprüche 1 bis 17, **dadurch gekennzeichnet, dass** die Druckhalteräume (25) mit Dichtungen (34) versehen sind und bei anliegendem Anker (11.6) gegenüber einem Schadraum (35) des jeweiligen Druckraumes (7.1, 7.2) abgedichtet sind.
